# EUROPÄISCHE PATENTSCHRIFT

(11) **EP 0 919 560 B1**
(45) Veröffentlichungstag und Bekanntmachung des Hinweises auf die Patenterteilung: **25.02.2004**
(21) Anmeldenummer: 98121820.9
(22) Anmeldetag: 17.11.1998
(51) Int. Cl.: C07F 9/30

(54) **Verfahren zur Herstellung von Metallsalzen von Aryl-alkylphosphinsäuren**
Process for the preparation of metal salts of aryl-alkylphosphinic acids
Procédé pour la préparation de sels métalliques d'acides aryl-alkylphosphiniques

(30) Priorität: 28.11.1997 DE 19752727; 10.11.1998 DE 19851774
(43) Veröffentlichungstag der Anmeldung: 02.06.1999
(73) Patentinhaber: Clariant GmbH, 65929 Frankfurt am Main (DE)
(72) Erfinder: Weferling, Norbert Dr., 50354 Hürth (DE); Schmitz, Hans-Peter, 50321 Brühl (DE)

(56) Entgegenhaltungen:
- FR-A- 1 558 606
- US-A- 2 957 931
- WILLIAM C. DRINKARD: "Some salts of symmetric phosphinic acids" JOURNAL OF THE AMERICAN CHEMICAL SOCIETY., Bd. 74, Nr. 21, - 5. November 1952 Seiten 5520-5521, XP002093391 DC US

## Beschreibung

Die Erfindung betrifft ein Verfahren zur Herstellung von Metallsalzen von Aryl-alkylphosphinsäuren sowie die Verwendung der nach diesem Verfahren hergestellten Verbindungen.

Aluminiumsalze von Dialkylphosphinsäuren sind als Flammschutzmittel bekannt (EP 0 699 708 A1). Sie können nach verschiedenen Verfahren hergestellt werden.

Die DE 24 47 727 A1 beschreibt schwerentflammbare Polyamidformmassen, die ein Salz einer Phosphinsäure oder einer Diphosphinsäure enthalten.

Die EP-A-0 699 708 beschreibt flammgeschützte Polyesterformmassen, wobei die Polyester durch den Zusatz von Calcium- oder Aluminiumsalzen von Phosphin- oder Diphosphinsäure flammfest ausgerüstet werden. Die vorgenannten Salze werden durch Umsetzung der entsprechenden Dialkylphosphinsäuren mit Calcium- oder Aluminiumhydroxid erhalten.

In der US-A-2 957 931 werden eine Vielzahl von Verbindungen und Verfahren zu deren Herstellung beschrieben, die eine Phosphor-Kohlenstoff-Bindung enthalten. Es werden jedoch nur Verbindungen mit einer relativ langen Kohlenstoffkette erhalten, die Ausbeuten und Reinheiten der erhaltenen Produkte erscheinen fraglich, zudem werden regelmäßig nur Produktmischungen erhalten, die schwer oder gar nicht trennbar sind.

Die FR-A-1 558 606 betrifft die Herstellung von Metallsalzen von Alkylhydroxyphenylphosphinsäuren ausgehend von den entsprechenden Alkylhydroxyphenylphosphinsäuren. Bei allen beschriebenen Beispielen wird jedoch lediglich das Metallsalz von (3,5-di-tbutyl-4-hydroxybenzyl)benzolphosphinat als sehr komplexe Verbindung erhalten. Das Verfahren ist in technischem Maßstab nicht durchführbar.

Schließlich beschreiben Nifant'ev et al. (JACS 74, Nr. 21 vom 05.11.1952, S. 5520/1) die sauer katalysierte Hydrophosphorylierung von Olefinen, wobei die Zugabe einer anorganischen Säure während der Herstellung zwingend notwendig ist.

Die vorgenannten Verfahren haben insbesondere den Nachteil, daß sie von technisch nicht oder nur unter großem Aufwand herzustellenden Ausgangsverbindungen ausgehen.

Es ist bisher jedoch kein technisch durchführbares Verfahren bekannt, mit dem sich Metallsalze von Aryl-alkylphosphinsäuren herstellen lassen.

Der Erfindung liegt die Aufgabe zugrunde, ein Verfahren zur Herstellung von Metallsalzen von Aryl-alkylphosphinsäuren zur Verfügung zu stellen, das auf einfache Art und Weise zu den gewünschten Endprodukten führt.

Diese Aufgabe wird gelöst durch ein Verfahren der eingangs beschriebenen Art, dadurch gekennzeichnet, daß man
a) Olefine mit Arylphosphonigen Säuren und/oder deren Alkalisalzen in Gegenwart eines kationischen Radikalstarters umsetzt, und
b) die nach a) erhaltenen Aryl-alkylphosphinsäuren und/oder deren Alkalisalze mit Metallverbindungen von Mg, Ca, Al, Sb, Sn, Ge, Ti, Zn, Fe, Zr, Ce, Bi, Sr, Mn, Li, Na und/oder K zu den Aryl-alkylphosphinsäuresalzen der Metalle umsetzt.

Bevorzugt handelt es sich bei den Olefinen um lineare oder verzweigte α-Olefine.

Bevorzugt handelt es sich bei den Olefinen um Ethylen, n-, i-Propylen, n-, i-Buten, n-, i-Penten, n-, i-Hexen, n-, i-Octen, 1-Decen, 1-Dodecen, 1-Tetradecen, 1-Hexadecen, n-Eicosen, und/oder 2,4,4-Tri-methylpenten-Isomerengemisch.

Bevorzugt werden als Olefine solche mit innenständiger Doppelbindung, cyclische oder offenkettige Diene und/oder Polyene mit 4 bis 20 Kohlenstoffatomen eingesetzt.

Bevorzugt tragen die Olefine eine funktionelle Gruppe.

Als Olefine sind Verbindungen der allgemeinen Formel 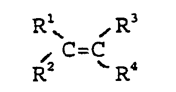 in der R¹-R⁴ gleich oder verschieden sein können und für Wasserstoff, eine Alkylgruppe mit 1 bis 18 C-Atomen, für Phenyl, Benzyl oder alkylsubtituierte Aromaten stehen, geeignet.

Geeignet sind ebenfalls Cycloolefine der Formel 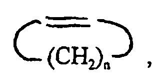 insbesondere Cyclopenten, Cyclohexen, Cycloocten und Cyclodecen.

Eingesetzt werden können auch offenkettige Diene der Formel 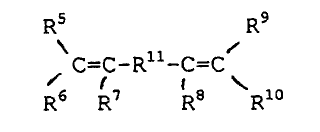 in der R⁵ - R¹⁰ gleich oder verschieden sind und für Wasserstoff oder eine C₁ bis C₆-Alkylgruppe stehen und R¹¹ für (CH₂)ₙ mit n=0 bis 6 steht. Bevorzugt sind hierbei Butadien, Isopren und 1,5-Hexadien.

Als Cyclodiene sind 1,3 Cyclopentadien, Dicyclopentadien und 1,5-Cyclooctadien sowie Norbomadien bevorzugt.

Bevorzugt handelt es sich bei der Arylphosphonigen Säure und/oder deren Alkalisalze um Phenylphosphonige Säure und/oder deren Alkalisalze.

Bevorzugt handelt es sich bei dem Aryl-Rest der Aryl-alkylphosphinsäuren und Arylphosphonigen Säuren um Aromaten mit 6 bis 12 C-Atomen, die mit Halogenen, Hydroxyl-, Aryl-, Alkyl-, Ether-, Ester-, Keto-,Carboxyl-, Sulfonyl- und/oder Chloralkylgruppen einfach oder mehrfach substituiert sein können.

Bevorzugt werden als Radikalstarter solche mit einer Azo-Gruppe eingesetzt, die kationisch oder nicht-kationisch sind. Es handelt sich bei den Azo-Verbindungen also um kationische und/oder nicht-kationische Azo-Verbindungen.

Bevorzugt werden als kationische Azo-Verbindungen 2,2'-Azobis(2-amidinopropan)-dihydrochlorid oder 2,2'-Azobis(N,N'-dimethylenisobutyramidin)dihydrochlorid eingesetzt.

Erfindungsgemäß geeignet sind auch nicht-kationische Azo-Verbindungen wie Azobis(isobutyronitril), 4,4'-Azobis(4-cyano-pentansäure) und, 2,2'Azobis(2-methylbutyronitril).

Erfindungsgemäß geeignet sind ebenfalls als Radikalstarter peroxidische anorganische Radikalstarter (Wasserstoffperoxid, Ammoniumperoxodisulfat, Kaliumperoxodisulfat etc.) und/oder peroxidische organische Rädikalstarter (Dibenzoylperoxid, Di-tert.-butylperoxid, Peressigsäure etc.).

Eine breite Auswahl geeigneter Radikalstarter findet sich beispielsweise in Houben-Weyl, Ergänzungsband 20, im Kapitel "Polymerisation durch radikalische Initiierung" auf den Seiten 15-74.

Bevorzugt handelt sich bei den Metallverbindungen um Metalloxide, -hydroxide, -oxidhydroxide, -sulfate, -acetate, -nitrate, -chloride und/oder -alkoxide.

Besonders bevorzugt handelt es sich bei den Metallverbindungen um Aluminiumhydroxid oder um Aluminiumsulfate.

Bevorzugt erfolgt die Umsetzung in Gegenwart von Carbonsäuren.

Besonders bevorzugt handelt es sich bei der Carbonsäure um Essigsäure.

Bevorzugt erfolgt die Umsetzung bei einer Temperatur von 40 bis 130 °C.

Besonders bevorzugt erfolgt die Umsetzung bei einer Temperatur von 60 bis 100 °C.

Insbesondere wird das Verfahren bevorzugt bei einer Temperatur von 80 bis 95 °C ausgeführt.

Bevorzugt erfolgt die Umsetzung in einem Druckreaktor. Dies gilt insbesondere, wenn der Siedepunkt der Olefine unterhalb der Reaktionstemperatur liegt.

Dabei erfolgt die Umsetzung im Schritt b) nach Einstellung eines für das jeweilige System Aryl-alkylphosphinsäure/Metallverbindung optimalen pH-Bereichs für die Salzfällung.

Die Erfindung betrifft auch die Verwendung der nach dem vorstehend beschriebenen Verfahren erhaltenen Aryl-alkylphosphinsäuren und/oder deren Alkalisalzen zur Herstellung von Flammschutzmitteln.

Die Erfindung betrifft ebenfalls die Verwendung der nach dem vorstehend beschriebenen Verfahren erhaltenen Aryl-alkylphosphinsäuren und/oder deren Alkalisalzen zur Herstellung von Flammschutzmitteln für thermoplastische Polymere wie Polyethylenterephthalat, Polybutylenterephthalat, Polystyrol oder Polyamid und für Duroplaste.

Die nach dem vorstehend beschriebenen Verfahren erhaltenen Aryl-alkylphosphinsäuren und/oder deren Metallsalze finden auch Verwendung als Additive in polymeren Massen, als Extraktionsmittel und oberflächenaktive Mittel.

Die Erfindung wird durch die nachstehenden Beispiele erläutert.

### Beispiel 1

### a) Herstellung der Aryl-alkylphosphinsäure

500 g (3,5 Mol) Phenylphosphonige Säure wurden zusammen mit 4 kg Essigsäure in einem 16-L-Druckreaktor eingefüllt. Anschließend wurde unter Rühren bis auf 85 °C Innentemperatur aufgeheizt und soviel Ethylen aufgedrückt, bis bei 5 bar eine Sättigung erreicht war. Danach wurden 27 g (100 mMol, entspricht 3 Mol%, bezogen auf die eingesetzte Phenylphosphonige Säure) 2,2'-Azobis(2-amidinopropan)dihydrochlorid, gelöst in 100 ml Wasser innerhalb 3 Stunden zudosiert. Die exotherme Reaktion wurde mittels der Dosiergeschwindigkeit der vorgenannten Radikalstarterlösung so gesteuert, daß max. 95 °C Reaktionstemperatur erreicht wurde. Während der weiteren Reaktion wurde Ethylen so nachgeführt, daß der Druck über die gesamte Dauer des Versuchs auf etwa 5 bar gehalten wurde. Anschließend ließ man noch 3 h bei 85 °C nachreagieren. Dann wurde der Reaktor entspannt und abgekühlt. Die Auswaage betrug 4,7 kg (100 % der Theorie).

| | | |
|---|---|---|
| ³¹P-NMR-Analyse | Phenylphosphonige Säure | 1,3 Mol% |
| | Phenyl-ethylphosphinsäure | 85,2 Mol% |
| | Phenyl-butylphosphinsäure | 10,0 Mol% |
| | unbekannte Komponenten | 3.5 Mol% |

### b) Herstellung der Aluminiumsalze der Phenylethyl- und Phenylbutylphosphinsäure

1 kg der nach Schritt a) erhaltenen Lösung wurde mit einer Lösung von 165 g (0,25 Mol) Aluminiumsulfat-Hydrat in 300 ml Wasser versetzt und unter Rühren auf 45 °C erwärmt.

Anschließend fügte man soviel 25%ige Natronlaugelösung zu, daß der pH-Wert zwischen 4,5 und 4,9 lag. Die Ausfällung der Aluminiumphosphinate wurde dann durch zweistündiges Erhitzen der Suspension auf 85 °C vervollständigt.

Nach Abkühlung auf Raumtemperatur wurde über eine Nutsche filtriert und der Rückstand mit Wasser und Aceton gewaschen. Nach Trocknung des Produktes im Vakuumtrockenschrank bei 120 °C wurden 116 g eines farblosen Pulvers erhalten. Die Ausbeute betrug 91 % der Theorie.

| | | |
|---|---|---|
| Analysenwerte | Phosphor | gef. 16,9 %, ber. 17,2 % (w/w) |
| | Aluminium | gef. 5,2 %, ber. 5,0 % (w/w) |

## Patentansprüche

1. Verfahren zur Herstellung von Metallsalzen von Aryl-alkylphosphinsäuren, **dadurch gekennzeichnet, daß** man
a) Olefine mit Arylphosphonigen Säuren und/oder deren Alkalisalzen in Gegenwart eines Radikalstarters umsetzt, wobei es sich bei den Olefinen um Ethylen, n-, i-Propylen, n-, i-Buten, n-, i-Penten, n- und/oder i-Hexen handelt und
b) die nach a) erhaltenen Aryl-alkylphosphinsäuren und/oder deren Alkalisalze mit Metallverbindungen von Mg, Ca, Al, Sb, Sn, Ge, Ti, Zn, Fe, Zr, Ce, Bi, Sr, Mn, Li, Na und/oder K zu den Aryl-alkylphosphinsäuresalzen der Metalle umsetzt.

2. Verfahren nach Anspruch 1, **dadurch gekennzeichnet, daß** es sich bei der Arylphosphonigen Säure und/oder deren Alkalisalze um Phenylphosphonige Säure und/oder deren Alkalisalze handelt.

3. Verfahren nach Anspruch 1 oder 2, **dadurch gekennzeichnet, daß** es sich bei dem Aryl-Rest der Aryl-alkylphosphinsäuren und Arylphosphonigen Säuren um Aromaten mit 6 bis 12 C-Atomen handelt, die mit Halogenen, Hydroxyl-, Aryl-, Alkyl-, Ether-, Ester-, Keto-,Carboxyl-, Sulfonyl- und/oder Chloralkylgruppen einfach oder mehrfach substituiert sein können.

4. Verfahren nach einem oder mehreren der Ansprüche 1 bis 3, **dadurch gekennzeichnet, daß** als Radikalstarter solche mit einer Azo-Gruppe eingesetzt werden, die kationisch oder nicht-kationisch sind.

5. Verfahren nach einem oder mehreren der Ansprüche 1 bis 4, **dadurch gekennzeichnet, daß** als kationische Radikalstarter 2,2'-Azobis(2-amidinopropan)dihydrochlorid oder 2,2'-Azobis(N,N'dimethylenisobutyramidin)dihydrochlorid eingesetzt wird.

6. Verfahren nach einem oder mehreren der Ansprüche 1 bis 5, **dadurch gekennzeichnet, daß** die Umsetzung in Gegenwart von Carbonsäuren erfolgt.

7. Verfahren nach Anspruch 6, **dadurch gekennzeichnet, daß** es sich bei der Carbonsäure um Essigsäure handelt.

8. Verfahren nach einem oder mehreren der Ansprüche 1 bis 7, **dadurch gekennzeichnet, daß** die Umsetzung bei einer Temperatur von 40 bis 130°C erfolgt.

9. Verfahren nach einem oder mehreren der Ansprüche 1 bis 8, **dadurch gekennzeichnet, daß** die Umsetzung bei einer Temperatur von 60 bis 100 °C erfolgt.

10. Verfahren nach einem oder mehreren der Ansprüche 1 bis 9, **dadurch gekennzeichnet, daß** die Umsetzung bei einer Temperatur von 80 bis 95 °C erfolgt.

11. Verfahren nach einem oder mehreren der Ansprüche 1 bis 10, **dadurch gekennzeichnet, daß** es sich bei den Metallverbindungen um Metalloxide, -hydroxide, -oxidhydroxide, -sulfate, -acetate, -nitrate, -chloride und/oder -alkoxide handelt.

12. Verfahren nach einem oder mehreren der Ansprüche 1 bis 11, **dadurch gekennzeichnet, daß** die Umsetzung in einem Druckreaktor erfolgt.

13. Verwendung der nach dem Verfahren der Ansprüche 1 bis 12 erhaltenen Metallsalze der Aryl-alkylphosphinsäuren zur Herstellung von Flammschutzmitteln.

14. Verwendung der nach dem Verfahren der Ansprüche 1 bis 12 erhaltenen Metallsalze der Aryl-alkylphosphinsäuren zur Herstellung von Flammschutzmitteln für thermoplastische Polymere wie Polyethylenterephthalat, Polybutylenterephthalat, Polystyrol oder Polyamid und für Duroplaste.

15. Verwendung der nach dem Verfahren der Ansprüche 1 bis 12 erhaltenen Metallsalze der Aryl-alkylphosphinsäuren als Additive in polymeren Formmassen, als Extraktionsmittel und oberflächenaktive Mittel.

## Claims

1. A process for preparing metal salts of arylalkylphosphinic acids, which comprises
a) reacting olefins with arylphosphonous acids and/or alkali metal salts thereof in the presence of a free-radical initiator, where the olefins are ethylene, n-propylene, isopropylene, n-butene, isobutene, n-pentene, isopentene, n-hexene and/or isohexene, and
b) reacting the arylalkylphosphinic acids and/or alkali metal salts thereof obtained by a) with metal compounds of Mg, Ca, Al, Sb, Sn, Ge, Ti, Zn, Fe, Zr, Ce, Bi, Sr, Mn, Li, Na and/or K to give the metal arylalkylphosphinate salts.

2. The process as claimed in claim 1, wherein the arylphosphonous acid and/or alkali metal salts thereof are phenylphosphonous acid and/or alkali metal salts thereof.

3. The process as claimed in claim 1 or 2, wherein the aryl radical of the arylalkylphosphinic acids and arylphosphonous acids is an aromatic having from 6 to 12 carbon atoms, which can be monosubstituted or polysubstituted by halogens, hydroxyl, aryl, alkyl, ether, ester, keto, carboxyl, sulfonyl and/or chloroalkyl groups.

4. The process as claimed in one or more of claims 1 to 3, wherein, as free-radical initiator, use is made of those having an azo group, which are cationic or non-cationic.

5. The process as claimed in one or more of claims 1 to 4, wherein, as cationic free-radical initiator, use is made of 2,2'-azobis(2-amidinopropane) dihydrochloride or 2,2'-azobis(N,N'-dimethyleneisobutyramidine) dihydrochloride.

6. The process as claimed in one or more of claims 1 to 5, wherein the reaction is carried out in the presence of carboxylic acids.

7. The process as claimed in claim 6, wherein the carboxylic acid is acetic acid.

8. The process as claimed in one or more of claims 1 to 7, wherein the reaction is carried out at a temperature of from 40 to 130°C.

9. The process as claimed in one or more of claims 1 to 8, wherein the reaction is carried out at a temperature of from 60 to 100°C.

10. The process as claimed in one or more of claims 1 to 9, wherein the reaction is carried out at a temperature of from 80 to 95°C.

11. The process as claimed in one or more of claims 1 to 10, wherein the metal compounds are metal oxides, metal hydroxides, metal hydroxide oxides, metal sulfates, metal acetates, metal nitrates, metal chlorides and/or metal alkoxides.

12. The process as claimed in one or more of claims 1 to 11, wherein the reaction is carried out in a pressure reactor.

13. The use of the metal salts of the arylalkylphosphinic acids obtained by the process of claims 1 to 12 for preparing flame retardants.

14. The use of the metal salts of the arylalkylphosphinic acids obtained by the process of claims 1 to 12 for preparing flame retardants for thermoplastic polymers such as poly(ethylene terephthalate), poly(butylene terephthalate), polystyrene or polyamide, and for thermosetting plastics.

15. The use of the metal salts of the arylalkylphosphinic acids obtained by the process of claims 1 to 12 as additives in polymeric molding compounds, as extraction media and surfactants.

## Revendications

1. Procédé pour la préparation de sels métalliques d'acides aryl-alkylphosphiniques **caractérisé en ce qu'**on
a) met à réagir des oléfines avec des acides arylphosphoneux et/ou leurs sels de métaux alcalins en présence d'un amorceur radicalaire, dans lequel il s'agit pour les oléfines d'éthylène, de n-, i-propylène, de n-, i-butène, de n-, i-pentène, de n- et/ou i-hexène, et
b) on met à réagir les acides aryl-alkylphosphiniques et/ou leurs sels de métaux alcalins avec des composés métalliques de Mg, Ca, Al, Sb, Sn, Ge, Ti, Zn, Fe, Zr, Ce, Bi, Sr, Mn, Li, Na et/ou K pour obtenir les sels d'acides aryl-alkylphosphiniques des métaux.

2. Procédé selon la revendication 1, **caractérisé en ce qu'**il s'agit pour l'acide arylphosphoneux et/ou de ses sels de métaux alcalins d'acide phénylphosphoneux et/ou de ses sels de métaux alcalins.

3. Procédé selon la revendication 1 ou 2, **caractérisé en ce qu'**il s'agit pour le reste alkyle des acides aryl-alkylphosphiniques et arylphosphoneux de composés aromatiques avec de 6 à 12 atomes de carbone, qui peuvent être substitués une ou plusieurs fois par des halogènes, des groupes hydroxyle, aryle, alkyle, éther, ester, céto, carboxyle, sulfonyle et/ou chloroalkyle.

4. Procédé selon une ou plusieurs des revendications 1 à 3, **caractérisé en ce qu'**on utilise comme amorceurs radicalaires ceux ayant un groupe azoïque, qui sont cationiques ou non cationiques.

5. Procédé selon une ou plusieurs des revendications 1 à 4, **caractérisé en ce qu'**on utilise comme amorceurs radicalaires cationiques le 2,2'-azobis(2-amidinopropane)dichlorhydrate ou le 2,2'-azobis(N,N'-diméthylèneisobutyramidine)dichlorhydrate.

6. Procédé selon une ou plusieurs des revendications 1 à 5, **caractérisé en ce qu'**on réalise la réaction en présence d'acides carboxyliques.

7. Procédé selon la revendication 6, **caractérisé en ce qu'**il s'agit pour l'acide carboxylique d'acide acétique.

8. Procédé selon une ou plusieurs des revendications 1 à 7, **caractérisé en ce qu'**on réalise la réaction à une température de 40 à 130 °C.

9. Procédé selon une ou plusieurs des revendications 1 à 8, **caractérisé en ce qu'**on réalise la réaction à une température de 60 à 100 °C.

10. Procédé selon une ou plusieurs des revendications 1 à 9, **caractérisé en ce qu'**on réalise la réaction à une température de 80 à 95 °C.

11. Procédé selon une ou plusieurs des revendications 1 à 10, **caractérisé en ce qu'**il s'agit pour les composés métalliques d'oxydes, hydroxydes, oxyhydroxydes, sulfates, acétates, nitrates chlorures et/ou alcoxydes de métaux.

12. Procédé selon une ou plusieurs des revendications 1 à 11, **caractérisé en ce qu'**on réalise la réaction dans un réacteur sous pression.

13. Utilisation des sels de métaux des acides aryl-alkylphosphiniques obtenus selon le procédé des revendications 1 à 12 pour la préparation d'agents ignifugeants.

14. Utilisation des sels de métaux des acides aryl-alkylphosphiniques obtenus selon le procédé des revendications 1 à 12 pour la préparation d'agents ignifugeants pour les polymères thermoplastiques comme le polytéréphtalate d'éthylène, le polytéréphtalate de butylène, le polystyrène ou le polyamide et pour les duroplastes.

15. Utilisation des sels de métaux des acides aryl-alkylphosphiniques obtenus selon le procédé des revendications 1 à 12 comme additifs dans des matières de moulages polymères, comme agents d'extraction et agents tensio-actifs.
